# EUROPEAN PATENT APPLICATION

(11) **EP 1 174 740 A1**
(43) Date of publication of application: **23.01.2002**
(21) Application number: 00402080.6
(22) Date of filing: 21.07.2000
(51) Int. Cl.: G02B 6/255

(54) **Method and apparatus for splicing optical fibers having different mode field diameters**

(71) Applicant: Corning Incorporated, Corning, New York 14831 (US)
(72) Inventor: Ramel, Romain, Corning, NY 14831 (US); Tian, Yong, Corning, NY 14831 (US)
(74) Representative: Boon, Graham Anthony

(57) **Abstract**

A fiber splicing apparatus of the present invention includes a support structure supporting the first and second optical fibers (112a,112b) such that ends of the fibers are aligned, and a laser emitting a laser beam (142) that impinges upon the ends of the first and second fibers such that the center of the laser beam is offset from the abutting ends of the fibers and impinges upon the first optical fiber a distance from the end of the first optical fiber, where the first optical fiber has a smaller mode field diameter (MFD) that the second fiber.

## Description

### BACKGROUND OF THE INVENTION

### 1. Field of the Invention

The present invention generally relates to an apparatus for localized heating of optical fibers, and more particularly to an apparatus and method for splicing optical fibers having different mode field diameters.

### 2. Technical Background

Manufacturers and assemblers of optical networks, systems, and components often must splice together optical single-mode fibers, which may be identical fibers or non-identical fibers, that is, fibers having different mode field diameters (MFDs). When splicing together two fibers, the ends of the fibers are aligned and fused together by applying heat to the splicing area.

Any splice loss resulting from splicing together two identical fibers is principally due to misalignment (*i.e.*, longitudinal, transverse, angular, etc.) between the fibers. For two non-identical spliced fibers, loss results not only from misalignment of the fibers, but also from MFD mismatch between the fibers. Fiber misalignment is an extrinsic splice loss factor and can be reduced by using different alignment and cleaving techniques. MFD mismatch is an intrinsic splice loss factor. To reduce MFD mismatch, the MFD at the end of one of the fibers must be changed to match that of the other fiber. The MFD of a fiber may be increased by preheating the end of a first fiber having the smaller MFD thereby causing core dopants of the first fiber to diffuse into the cladding. After the end of the first fiber is preheated and the MFD expands to match the MFD of the second fiber, the ends of the first and second fibers are aligned and fused.

Splicing two non-identical fibers thus requires two steps. The first step is performed by preheating the first fiber end using a CO₂ laser. In the second step, the fibers are aligned and spliced together using conventional techniques, such as using an electric arc splicer or a CO₂ laser. Each of these two steps requires handling and aligning of the fibers in different apparatus. Such handling and alignment is generally performed manually and thus adds significantly to the time and cost of manufacturing an optical system, particularly one requiring many such splices.

The presently used techniques for changing the MFD of a fiber are not particularly accurate, and therefore, the resulting MFD mismatch introduces loss.

Therefore, there exists the need for a method and apparatus that reduces the time and cost involved in splicing together two non-identical fibers. Additionally, there exists the need for a technique for more accurately changing the MFD of a fiber and thereby reducing splice loss.

### SUMMARY OF THE INVENTION

Accordingly, it is an aspect of the present invention to solve the above problems by providing a splicing method for splicing together two non-identical fibers in a single step thereby eliminating the need to handle and align fibers more than once and the need to provide or use more than one apparatus. Another aspect of the present invention is to more accurately control the MFD changes in the fibers and thereby obtain a splice exhibiting significantly less loss due to MFD mismatch. To achieve these and other aspects and advantages, the inventive method comprises the steps of supporting the two optical fibers such that the ends thereof are aligned, and projecting a laser beam from a laser onto the ends of the optical fibers such that the center of the laser beam impinges upon the first optical fiber a distance from the end of the first optical fiber and such that a portion of the laser beam simultaneously impinges upon the ends of the first and second optical fibers to heat and thereby fuse together the ends of the first and second fibers, where the first optical fiber has a smaller MFD than the second fiber.

Another aspect of the present invention is to provide a splicing apparatus that allows two non-identical fibers to be spliced together in a single step. To achieve these and other aspects and advantages, the splicing apparatus of the present invention comprises a support structure supporting the first and second optical fibers such that ends of the fibers are aligned, and a laser emitting a laser beam that impinges upon the ends of the first and second fibers such that the center of the laser beam is offset from the abutting ends of the fibers and impinges upon the first optical fiber a distance from the end of the first optical fiber, where the first optical fiber has a smaller MFD than the second fiber.

Additional features and advantages of the invention will be set forth in the detailed description which follows and will be apparent to those skilled in the art from the description or recognized by practicing the invention as described in the following description together with reference to the claims and appended drawings.

It is to be understood that the foregoing description is exemplary of the invention only and is intended to provide an overview for the understanding of the nature and character of the invention as it is defined by the claims. The accompanying drawings are included to provide a further understanding of the invention and are incorporated and constitute part of this specification. The drawings illustrate various features and embodiments of the invention which, together with their description serve to explain the principals and operation of the invention.

### BRIEF DESCRIPTION OF THE DRAWINGS

In the drawings:
Fig. 1 is a schematic diagram illustrating a portion of the splicing apparatus constructed in accordance with the present invention viewed perspectively;
Fig. 2 is a schematic diagram illustrating a portion of the splicing apparatus constructed in accordance with the present invention viewed from the side;
Fig. 3 is a plot of an examplary laser beam spot energy distribution produced by the splicing apparatus of the present invention;
Fig. 4A is a cross-sectional view of two abutting fibers having different MFDs;
Fig. 4B is a cross-sectional view of the fibers shown in Fig. 4A with a laser beam spot from the inventive splicing apparatus projected thereon;
Fig. 4C is a cross-sectional view of the fibers shown in Fig. 4A after splicing;
Fig. 5 is an optical/electrical diagram in block form of the splicing apparatus constructed in accordance with the present invention;
Fig. 6A is a front elevational view of an optical beamsplitter used in the splicing apparatus shown in Fig. 5; and
Fig. 6B is a side elevational view of the beamsplitter shown in Fig. 6A.

### DETAILED DESCRIPTION OF THE PREFERRED EMBODIMENT

Reference will now be made in detail to the present preferred embodiment of the invention, an example of which is illustrated in the accompanying drawings. Wherever possible, the same reference numerals will be used throughout the drawings to refer to the same or like parts.

As described above, the present invention pertains to an apparatus and method for splicing together the ends of a first optical fiber and a second optical fiber where the first optical fiber has a smaller MFD than the second fiber. In general, the method includes the steps of supporting the two optical fibers such that the ends thereof are aligned, and projecting a laser beam from a laser onto the ends of the two optical fibers such that the center of the laser beam impinges upon the first optical fiber a distance from the end of the first optical fiber and such that a portion of the laser beam simultaneously impinges upon the ends of the first and second optical fibers to heat and thereby fuse together the ends of the first and second fibers. As described below, the laser beam spot may have a Gaussian energy distribution such that the laser beam spot heats the first fiber to a higher temperature than the second fiber. By heating the first fiber with the smaller MFD to a higher temperature, the core dopants of the first fiber diffuse into the cladding to a much greater extent than those in the second fiber so that the MFDs become substantially equal at the butt joint of the two fibers. By also exposing the butt joint of the two fibers to a portion of the beam spot, the two fiber ends fuse together. Thus, two fibers having different MFDs may be spliced together using a single exposure step thereby significantly reducing manufacturing time and cost.

Having generally described the principles of the inventive method, an apparatus for carrying forth the inventive method is described below.

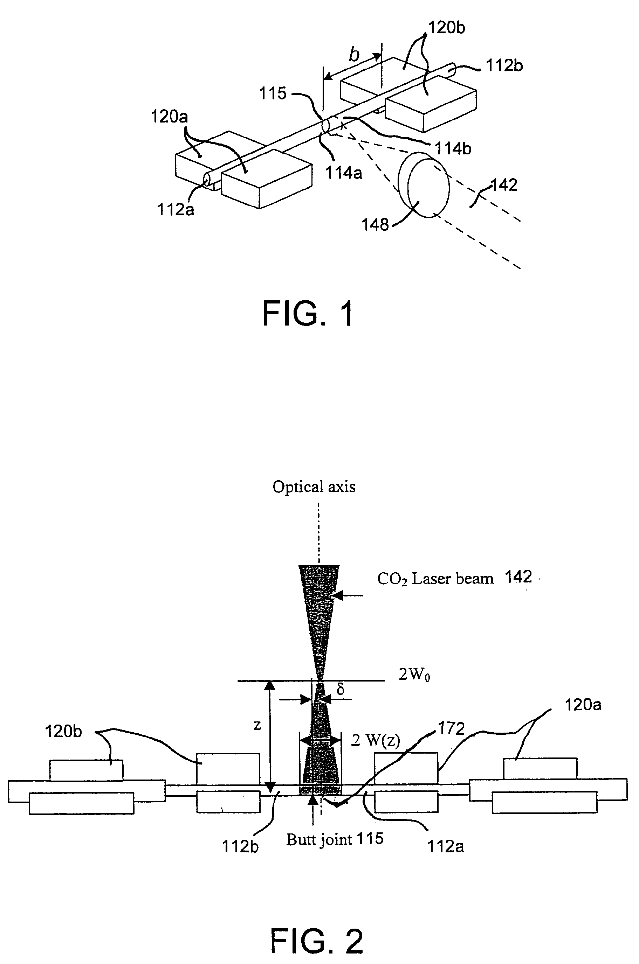

Figs. 1, 2, and 5 show a splicing apparatus constructed in accordance with the present invention. In general, the splicing apparatus is constructed in a manner similar to the splicing apparatus disclosed in commonly-owned European Patent Application No. 00400815.7, filed on March 23, 2000, with the exception of the modifications described below that allow that apparatus to be used to splice fibers having different MFDs.

The splicing apparatus includes a support including support members 120a and 120b for supporting two optical fibers 112a and 112b such that the ends thereof, 114a and 114b respectively, are aligned. The region in which fiber ends 114a and 114b abut one another is referred to as splicing area 115. As shown in Fig. 1, fibers 112a and 112b are cantilevered from support members 120a and 120b. The cantilever distance *b* is much shorter than the cantilever distance of a conventional electric splicer. Thus, the distance between support members 120a and 120b of the inventive splicing apparatus is less than about 6 mm and is preferably about 1 mm. By thus reducing the cantilever distance *b* to about 0.5 mm, one may more readily align fiber ends 114a and 114b. Because of the reduced cantilever, fibers 112a and 112b are less likely to bend significantly when ends 114a and 114b are pushed together, and the intrinsic curl of fibers 112a and 112b is less likely to result in misalignment of the fiber ends.

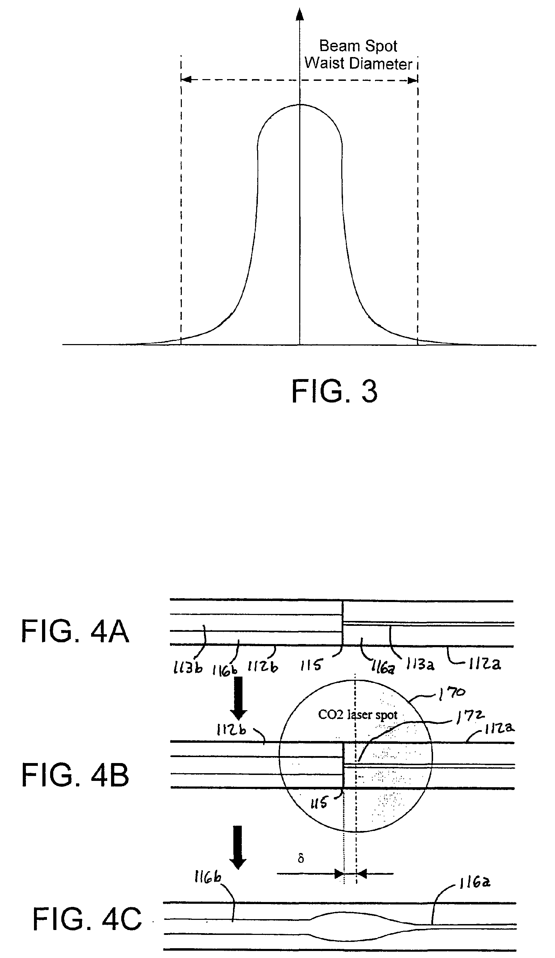

To enable support members 120a and 120b to be spaced more closely together, the inventive splicing apparatus utilizes a laser beam 142 to heat and fuse fiber ends 114a and 114b instead of a plasma field such as produced by electrodes of an electric arc splicer. The laser beam 142 may be focussed using a focussing lens 148 to a small spot at splicing area 115 with a high degree of consistency and precision. This focussed spot generally exhibits a Gaussian energy distribution, such as that shown in Fig. 3.

As mentioned above, the present invention exploits the fact that the laser beam spot has a Gaussian energy distribution by offsetting the center of the spot relative to the butt joint of fiber ends 114a and 114b when fibers 112a and 112b have different MFDs. For example, assuming first fiber 112a has a smaller MFD than second fiber 112b, as illustrated in Fig. 4A, the center 172 of the laser beam spot 170 (Fig. 4B) is offset from the butt joint of fiber ends 114a and 114b by a distance δ along the central axis of first fiber 112a. Due to the Gaussian energy distribution at laser beam spot 170, the portion of first fiber 112a proximate the butt joint is heated to a higher temperature than second fiber 112b. As noted above, heating the first fiber at a higher temperature than the second fiber causes dopants in the core 113a of fiber 112a to diffuse into the cladding 116a much faster than the dopant of core 113b of fiber 112b diffuses into cladding 116b. As described below, the time at which the fibers are exposed to the laser spot is controlled to obtain matching of the MFDs of the two fibers.

In general, each different type of fiber, especially specialty fibers, has different core compositions due, in part, to different core dopants. As a result, the speed at which core dopants diffuse into the cladding is different for different fibers and is temperature dependent. To control the diffusion rate and hence the MFD change rate, one may vary one or more of a number of different control variables, including the laser spot size, the laser power, and the offset distance δ of the center of the laser beam spot. As an example, the offset distance δ may be about 30 µm, the spot waist diameter may be about 1 mm, and the laser power may be about 4 W.

By enlarging the laser spot waist diameter, the spot covers a sufficient length of the fibers to provide the necessary energy to the fibers, and the homogeneity of heating along the main or central axis of the fibers is improved compared with a smaller laser spot of, for example, about 250 µm. In this manner, there is a temperature gradient along the central axis of the fibers that is proportional to the Gaussian energy distribution of across the laser beam spot, which results in a very smooth MFD change close to the end of the fibers. This technique further improves the control over the MFD change rate, while also improving the mechanical strength of the splice.

To demonstrate the lower splice loss that results from using the inventive method and apparatus, two specialty fibers (Flexcore 1060/CS980) were spliced using conventional splicing techniques and two conventional splicing apparatus and using the inventive apparatus and technique. Specifically, the above noted fibers having different MFDs were spliced by first heating the smaller MFD fiber with a CO₂ laser beam spot of 250 µm diameter until the MFD of that fiber was substantially the same as that of the larger MFD fiber. Some of the fibers were then spliced using an electric arc splicer available from Ericsson and others were spliced using an electric arc splicer available from Fujikura. For light having a wavelength of 1310 nm, the fibers spliced using the Ericsson splicer had an average splice loss of 0.151 dB (σ=0.05 dB) and the fibers spliced using the Fujikura splicer had an average splice loss of 0.167 dB (σ=0.059 dB). On the other hand, the same types of fibers spliced using the inventive method and apparatus had an average splice loss of only 0.143 dB (σ=0.021 dB) at 1310 nm.

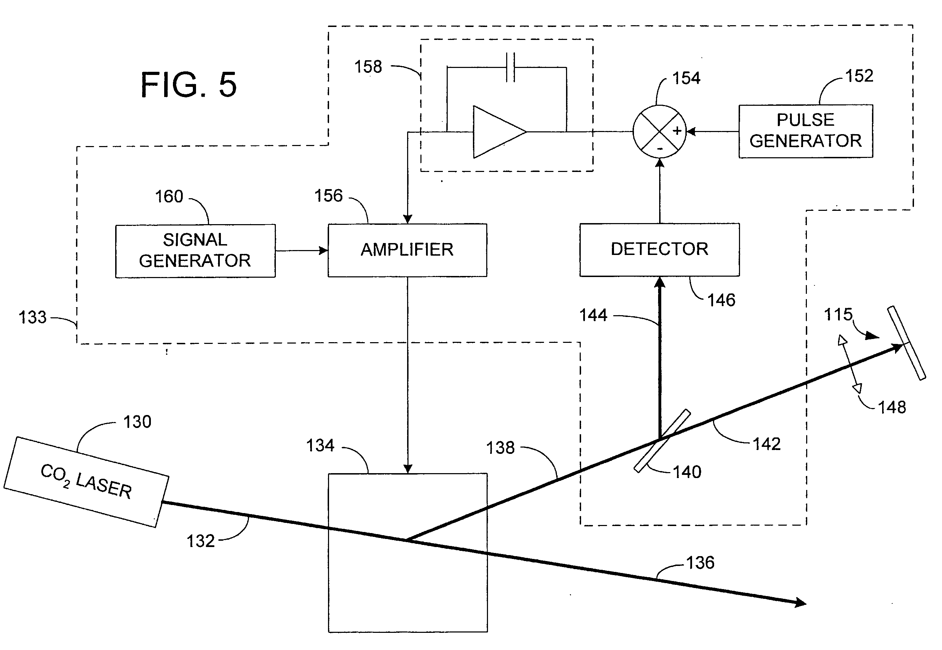

As illustrated in Fig. 5, laser beam 142 is. preferably produced by a CO₂ laser 130. Exemplary of laser 130 is model reference No. 48-2-28(W) manufactured by SYNRAD and distributed by BFI-OPTILAS, CE1834, 91018 Evry Cedex, France.

To accurately control the intensity of the laser beam, the inventive splicing apparatus utilizes a control loop 133 that acts upon the laser beam 132 output from CO₂ laser 130 instead of acting on CO₂ laser directly. As shown in Fig. 5, the splicing apparatus includes an optical modulator 134 that selectively modulates the intensity of laser beam 132. The extent to which optical modulator 134 varies the intensity of laser beam 132 is controlled by control loop 133. Control loop 133 is described further below.

Optical modulator 134 is responsive to an electrical signal supplied from control loop 133 to modulate the intensity of laser beam 132. In the exemplary embodiment shown in Fig. 3, optical modulator 134 diffracts laser beam 132 into a zero order of diffraction beam 136 and a first order of diffraction beam 138. The first order of diffraction beam 138 is directed towards a focussing lens 148 and splicing area 115. The zero order diffracted beam 136 may be directed towards a light absorber (not shown). Optical modulator 134 may be an acousto-optic modulator or an electro-optic modulator. Exemplary of optical modulator 134 is an acousto-optic modulator model No. AA.MG.40/A6@ 10.6 µm available from A&A Opto-Electronique, 6-Rue de Versailles, F-78470 St. Remy Les Chevreuse, France. The specifications for this particular acousto-optic modulator states that the modulator has a working wavelength of 10.6 µm and an angular separation between the zero order or the first order diffraction of 77 milliradians as well as a useful aperture of 6 mm and a modulation bandwidth of 500 kHz.

Control loop 133 includes a beamsplitter 140 that separates and diverts a portion 144 of beam 138 towards a detector 146. The remainder 142 of beam 138 is transmitted through beamsplitter 140 to lens 148 where it is focussed on splicing area 115 in the manner as shown in more detail in Fig. 2.

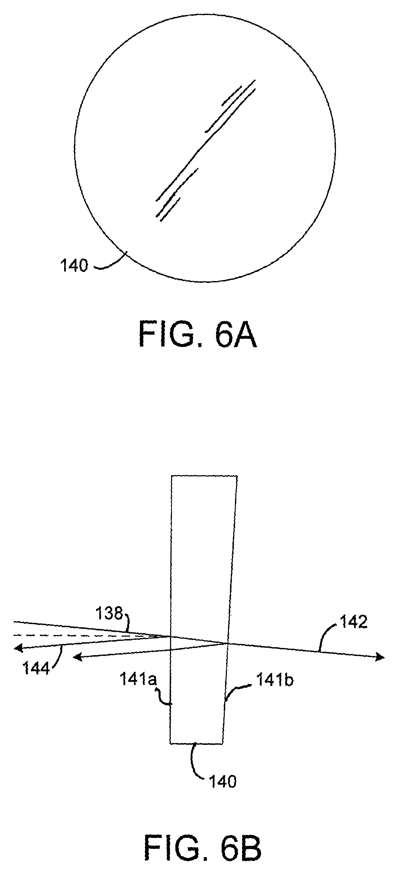

Beamsplitter 140 is preferably a prismatic window. As shown in Figs. 6A and 6B, beamsplitter 140 may have a disc-like shape and have two opposed faces 141a and 141b that are inclined with respect to one another at 2°. Preferably, beamsplitter 140 has a diameter of 24.95 mm, a thickness at the bottom portion thereof of approximately 3 mm, and a thickness at the upper portion of approximately 3.2 mm. Beamsplitter 140 is preferably made of ZnSe and is disposed such that the incident laser beam 138 forms a 2° angle with respect to a surface normal. Beamsplitter 140 deflects beam 144 towards detector 146. Beam 144 is the portion of beam 138 reflected from the first surface 141a. Any portion of beam 138 that is reflected off the rear surface 141b of beamsplitter 140 may be absorbed using a light absorbing element. The remainder of beam 138 is transmitted through beamsplitter 140 as beam 142.

Detector 146 may be any conventional photodetector and is preferably an infrared detector manufactured by SYNRAD, model No. 48-CL, distributed by BFI-OPTILAS. Detector 146 generates an electrical signal having a voltage representing the detected intensity of laser beam 144. Because the intensity of laser beam 144 is of known proportion to laser beam 142, the electrical signal generated by detector 146 is also representative of the intensity of laser beam 142.

Control loop 133 further includes a pulse generator 152 and a comparator 154, which compares the voltage of electrical pulses generated by pulse generator 152 with the voltage of the electrical signal generated by detector 146. The output of comparator 154 is supplied to an amplifier 156 via an integrator 158. Amplifier 156 responds to the integrated electrical signal supplied from integrator 158 by adjusting the amplitude of a fixed-frequency signal supplied from a signal generator 160. The selectively amplified fixed-frequency signal is then supplied from amplifier 156 to the input of optical modulator 134. Optical modulator 134 varies the intensity of the first order diffracted beam 138 in response to the varying amplitude levels of the electrical signal supplied from amplifier 156. A preferred amplifier 156 and signal generator 160 are available as a single package from A&A Opto-Electronique, model reference No. AA.MOD.40-50W, which has a carrier frequency of 40 MHz, a working range from 0 W to 50 W, and input levels from 0 V to 5 V on a 100 Ω load.

During operation, CO₂ laser 130 generates a pulsed laser beam 132. At the starting time, pulse generator 152, which may be an appropriately programmed personal computer, generates a pulse signal to synchronize the pulses of CO₂ laser 130 and the movement of the fiber to overlap. The pulse shape produced by the pulse generator 152 preferably has a profile corresponding to the desired intensity profile of the laser pulse that is detected by detector 146. In this manner, the amplitudes of the pulses produced by pulse generator 152 and detector 146 may be directly compared. If the amplitudes are equal, comparator 154 has a 0 volt output. Amplifier 156 does not change the amplitude of the fixed-frequency signal supplied by signal generator 160 when the output of comparator 154 is 0 volt. On the other hand, if the amplitude of the electrical pulse signal generated by detector 146 is different from that of pulse generator 152, the difference is applied to amplifier 156 as a positive or negative voltage. Amplifier 156 responds by either increasing or decreasing the amplitude of the fixed-frequency signal thereby changing the intensity of beam 138 and hence beams 144 and 142. The intensity of beam 138 is therefore adjusted until there is no difference between the electrical pulse signals generated by detector 146 and pulse generator 152.

By acting directly on the laser beam instead of on CO₂ laser 130 itself, the output beam 132 of CO₂ laser 130 itself is not perturbed by control loop 133. With such a system, 0.1 percent stability can be realized on the intensity of laser beam 142 during the pulse, resulting in a temperature variation of approximately ±2°C at splice area 115. Control of the splicing temperature to within ±2°C is a significant improvement over prior systems that only allowed temperature control to within ±36°C. During the laser pulse, the fibers are overlapping by a few micrometers, typically 6 µm for each fiber and thus 12 µm of total overlap.

Using the inventive fiber splicing apparatus, a plurality of pairs of fibers to be spliced may be aligned and supported in parallel, and then, sequentially moved into the path of the laser beam. In this manner, a large number of fibers may be quickly and precisely spliced in an automated assembly system.

It will become apparent to those skilled in the art that various modifications to the preferred embodiment of the invention as described herein can be made without departing from the spirit or scope of the invention as defined by the appended claims.

## Claims

1. A method for splicing together the ends of a first optical fiber and a second optical fiber where the first optical fiber has a smaller MFD than the second fiber, the method comprising the steps of:
supporting the two optical fibers such that the ends thereof are aligned; and
projecting a laser beam from a laser onto the ends of the two optical fibers such that the center of the laser beam impinges upon the first optical fiber a distance from the end of the first optical fiber and such that a portion of the laser beam simultaneously impinges upon the ends of the first and second optical fibers to heat and thereby fuse together the ends of the first and second fibers.

2. The method of claim 1, wherein the laser is a CO₂ laser.

3. The method of claim 1, wherein the laser beam spot has a Gaussian energy distribution.

4. The method of claim 1, wherein the laser beam spot is at least about 500 µm.

5. The method of claim 1, wherein the laser beam spot is about 1 mm.

6. The method of claim 1, wherein the center of the laser beam spot is offset about 30 µm from the butt joint of the two fibers.

7. An apparatus for splicing together the ends of a first optical fiber and a second optical fiber where the first optical fiber has a smaller MFD than the second fiber, the apparatus comprising:
a support structure supporting the first and second optical fibers such that ends of the fibers are aligned; and
a laser emitting a laser beam that impinges upon the ends of the first and second fibers such that the center of the laser beam is offset from the abutting ends of the fibers and impinges upon the first optical fiber a distance from the end of the first optical fiber.

8. The apparatus of claim 7, wherein said support structure supporting the first and second optical fibers such that ends of the fibers overlap.

9. The apparatus of claim 7, wherein said laser is a CO₂ laser.

10. The apparatus of claim 7 and further including:
an optical modulator positioned to receive and selectively modulate the intensity of the laser beam to project a modulated laser beam along a first optical path that terminates at the region of the first and second optical fibers to be heated; and
a control loop that monitors the intensity of the modulated laser beam and controls said optical modulator to regulate the intensity of the modulated laser beam in response to the monitored intensity level.

11. The apparatus of claim 7, wherein said support structure includes two support members each of which supports one of the two optical fibers, said support members being spaced less than 6 mm apart.

12. The apparatus of claim 7, wherein said support includes two support members each of which supports one of the two optical fibers, said support members being spaced about 1 mm apart.

13. The apparatus of claim 7, wherein the laser beam spot has a Gaussian energy distribution.

14. The apparatus of claim 7, wherein the laser beam spot is at least about 500 µm.

15. The apparatus of claim 7, wherein the laser beam spot is about 1 mm.

16. The apparatus of claim 7, wherein the center of the laser beam spot is offset about 30 µm from the butt joint of the two fibers.
